Europäisches Patentamt

European Patent Office

Office européen des brevets

(11) Publication number: **0 276 452**
**A1**

## (12) EUROPEAN PATENT APPLICATION

(21) Application number: **87118772.0**

(22) Date of filing: **17.12.87**

(51) Int. Cl.4 **C08G 18/42** , C08K 5/15 ,
C08K 5/10 , C08J 9/00 ,
C08G 18/14 , C08L 67/02 ,
C08L 71/00

(30) Priority: **24.12.86 US 946268**

(43) Date of publication of application:
**03.08.88 Bulletin 88/31**

(84) Designated Contracting States:
**DE FR GB IT NL**

(71) Applicant: **HERCULES INCORPORATED**
**Hercules Plaza**
**Wilmington Delaware 19894(US)**

(72) Inventor: **Panchak, John Robert**
**409 Brandywine Blvd. Colonial Woods**
**Wilmington Delaware 19803(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) Viscosity reducing agents for aromatic polyester polyols and polyether polyols.

(57) The viscosity of aromatic polyester polyols and polyether polyols is reduced by adding 5% to 15%, based on the weight of the polyol, of a cyclic organic viscosity reducing agent selected from propylene carbonate, ethylene carbonate, mixtures of ethylene carbonate and propylene carbonate, and caprolactone.

EP 0 276 452 A1

# VISCOSITY REDUCING AGENTS FOR AROMATIC POLYESTER POLYOLS AND POLYETHER POLYOLS

This invention relates to a method for reducing the viscosity of highly viscous aromatic polyester polyols used in the manufacture of rigid polyurethane/polyisocyanurate foams.

Because of their high viscosity, aromatic polyester polyols such as those derived from dimethyl terephthalate (DMT) process residue must be stored and pumped at elevated temperatures (70-90°C). This high viscosity limits the use of such polyols, for example, in the manufacture of rigid foams, since many producers of rigid foam products are not equipped to store and handle polyols at these temperatures. In addition, some rigid foam insulation systems such as spray foams and appliance foams must be based on low viscosity polyols to achieve the proper flow rate and proper component mixing in the dispensing equipment. Other less viscous aromatic polyester polyols, and polyether polyols, must also be heated before use, although they do not have to be stored at an elevated temperature.

An additive that would reduce the viscosity of these polyols would be desirable, although any additive used must not adversely affect the physical properties of foams prepared from the polyols.

It has now been found that certain cyclic organic compounds can be used to reduce the viscosity of polyether polyols, and aromatic polyester polyols derived from DMT process residue, thereby facilitating the handling and storage of the polyols at room temperature. The viscosity of foam formulations prepared from a blend of these cyclic organic compounds and the polyols is also reduced, thereby facilitating processing of the formulation.

The aromatic polyester polyol composition of this invention consists essentially of(1) aromatic polyester polyols derived from DMT process residue and (2) from about 5% to about 15%, based on the weight of the polyol, of a cyclic organic viscosity reducing agent selected from the group consisting of propylene carbonate, ethylene carbonate, mixtures of ethylene carbonate and propylene carbonate, and caprolactone. The presence of the viscosity reducing agent does not adversely affect the physical properties of rigid polyurethane/polyisocyanurate foams prepared from the polyols.

The viscosity reducing agents of this invention can be used with aromatic polyester polyols and with polyether polyols. The viscosity reducing agents are especially suitable for use with the highly viscous aromatic polyester polyols that are the reaction product of dimethyl terephthalate process residue and a glycol or mixture of glycols such as ethylene glycol; 1,2-propanediol; 1,3-or 1,4-butanediol; neopentyl glycol; hexanediol; diethylene glycol and dipropylene glycol.

The residue from the manufacture of dimethyl terephthalate (DMT) is a tar-like, solid material composed of a highly complex mixture of high molecular weight monomeric and polymeric constituents, included among which are the methyl and benzyl esters of biphenyl and triphenyl dicarboxylic and tricarboxylic acids. The high aromatic content of the residue contributes to the improved flame resistance, dimensional stability and compressive strength of foams made from the polyols of this invention. The residue at 25°C has the following typical ranges of properties:

| | | |
|---|---|---|
| Color | | Dark Brown |
| Drop Softening Point[1] | | 10-140°C |
| Acid Number (ASTM D1639, neutral chloroform solvent) | | 10-110 |
| Methoxyl in $COOCH_3$ (ASTM D-1166-60) | | 7-30% by weight |
| DMT | | 0-20% by weight |
| Saponification Number[2] | | 375-500 |

[1] Hercules drop softening point method as described on page 12 of a booklet entitled "Wood Rosins, Modified Rosins and Related Resins", published in 1963 by Hercules Powder Company now by change of name Hercules Incorporated.
[2] Anal. Chem. 23, 1126 (1951).

The viscosity reducing agents of this invention are selected from ethylene carbonate, propylene carbonate, mixtures of ethylene carbonate and propylene carbonate, and caprolactone. Propylene carbonate is preferred. From about 5% to about 15% by weight of the viscosity reducing agent, based on the weight of the polyol, can be added. About 5% by weight is preferred.

In this specification, the term "rigid polyurethane/polyisocyanurate" (PUR/PIR) foams refers to foams containing both urethane linkages and isocyanurate rings. PUR/PIR foams prepared from a blend of the polyol and the viscosity reducing agents of this invention show no significant differences in physical properties as compared to PUR/PIR foams prepared from the polyol without the viscosity reducing agent. There is no adverse affect on the physical properties of PUR/PIR foams if a blend of the polyol and the viscosity reducing agent is stored for several weeks before use in the preparation of the foam.

PUR/PIR foams prepared from formulations containing the viscosity reducing agent and the aromatic polyester polyols that are the reaction product of DMT process residue and diethylene glycol have the following advantages over foams prepared from formulations without the viscosity reducing agent: (1) The dimensional stability of the foam is improved slightly. (2) Less fluorocarbon blowing agent is required to achieve identical foam density. When using a 5/95 blend of propylene carbonate and the aromatic polyester polyols, the amount of blowing agent is approximately 5% less than that normally required in the absence of the viscosity reducing agent. (3) For a given amount of blowing agent, formulations containing propylene carbonate give lower density foams than the same formulations without propylene carbonate. For example, when using a formulation prepared from a 5%/95% blend of propylene carbonate and the aromatic polyester polyols, the density of the foam prepared from this formulation is 27.4 kilograms per cubic meter ($kg/m^3$) compared with 28.5 $kg/m^3$ for a foam prepared from the same formulation without the propylene carbonate. (4) Because of the low viscosity, foam producers can use larger amounts of the aromatic polyester polyols in their foam formulations, thereby improving the flame retardancy of the foam product. The improved flame retardancy is due to the higher aromatic content of the foam formulation. (5) The K-factor of the foam, a measure of its insulation ability, is increased slightly.

Definitions of the terms used in the reaction profiles and testing of the physical properties of foams in the following examples are given below.

## Cream Time

Cream time or inititiation time is the time interval between the mixing of the ingredients and the visible start of the foaming reaction. The reaction begins when the mixture turns a creamy color or when the foam just begins to rise.

## Gel Time

Gel time is the time interval between the mixing of the ingredients and that time when the foamed polymer reaches a stable, three dimensional structure.

## Tack Free Time

Tack free time is the time interval between the mixing of the ingredients and the time when the surface of the foam does not feel tacky to the hand or does not adhere to a wooden tongue depressor.

## Rise Time

Rise time is that interval between the mixing of the ingredients and the time that the foam stops rising in an open container.

## Maximum Exotherm

This temperature is measured by inserting a temperature probe into the center of the foam. The maximum exotherm temperature is usually achieved about 30 minutes after foam formulation. This temperature must be high enough to cure the foam completely (minimum 100°C) but not so high as to scorch the interior of the foam. Some indication of the insulating quality of the foam can also be gained from this test if the length of time the temperature stays at the maximum is also noted.

## Density (ASTM D 1622)

A 10.16 cm x 10.16 cm x 2.54 cm specimen is cut from a foam bun. The test specimen is measured and then weighed to the nearest 0.01 gram. Density in kilograms per cubic meter is then calculated using the following formula. Density = w/v where w equals the weight of a sample in kilograms and v equals volume in cubic meters.

## Dimensional Stability, % Volume Expansion (ASTM D 2126)

The samples for testing measure 10.16 cm x 10.16 cm x 2.54 cm. The dimensions are measured at 1, 7 and 14 days aging at 70°C and 100% relative humidity (RH). The values are reported as percent change in volume.

## Compressive Strength and Modulus (ASTM D 1621)

The samples for testing measure 5.08 cm x 5.08 cm x 2.54 cm. The samples are compressed to 10% of their measured thickness. Compressive strength is calculated by dividing the maximum load in kilograms by the area of the sample in square centimeters. Compressive modulus is calculated by dividing the stress on the sample by the strain.

## "K" Factor (ASTM C 518)

A measure of the insulation ability or thermal conductivity of the foam. The "K" factor is normally expressed as watts per meter °K.

## Mobil 45° Burn Test

A small scale laboratory test developed by Mobil Chemical Co. for screening the flame retarding properties of low density, rigid poyurethane foams. The test is recommended as a convenient tool for determining the most effective flame retardants, polyols, isocyanates and other components when measuring flame spread ratings of foam formulations by the ASTM E-84 Tunnel Test. A preweighed foam specimen measuring 1.27 cm x 5.08 cm x 21.59 cm is ignited using a Bunsen burner while being held so that the long axis of the foam is at a 45° angle with the horizontal. The 5.08 cm axis of the foam is the vertical plane. The flame is maintained under the foam until all visible flaming ceases. The foam specimen is again weighed and the % weight loss is calculated. Values reported are the average of three replicates.

In this specification, all parts and percentages are by weight unless otherwise noted.

## Example 1

The polyol used in this example is TERATE 203 aromatic polyester polyol manufactured by Hercules Incorporated.

The following blends of polyol and propylene carbonate are prepared and tested to determine the effect of propylene carbonate on the viscosity of the polyol. The viscosities in this and the following examples are determined using an RVT Wells-Brookfield microviscometer with a CP-52 spindle.

| | | | | |
|---|---|---|---|---|
| Polyol | 47.5 g | 45 g | 42.5 g | 50.0 g |
| Propylene Carbonate | 2.5 g | 5 g | 7.5 g | -- |
| Ratio | 95/5 | 90/10 | 85/15 | 100/0 |
| Viscosity @25°C(cps) | 6,488 | 3,499 | 1,697 | 18,698 |

## Example 2

The formulations listed below are used to prepare PUR/PIR foams at an index of 250. The foams prepared from these formulations are tested to determine the effect of propylene carbonate on their physical properties. In the preparation of the foams the "A" component contains the isocyanate. The "B" component typically contains the desired level of hydroxyl groups, as well as a surfactant, PUR/PIR catalyst(s) and a blowing agent. After the "B" component is prepared, the isocyanate is weighed into the vessel containing the "B" component and the mixture is stirred for 5 seconds. The mixture is then poured into a mold where it reacts to form the foam. In the formulations described below, all values are parts by weight.

| | | | | |
|---|---|---|---|---|
| Polyol[1] | 191.3 | 202.5 | 285 | 300 |
| Propylene carbonate | 33.8 | 22.5 | 15 | -- |
| Ratio, polyol/ propylene carbonate | 85/15 | 90/10 | 95/5 | 100/0 |
| Surfactant[2] | 5.63 | 5.63 | 7.5 | 7.5 |
| Urethane Catalyst[3] | 7.20 | 7.20 | 12.0 | 12.0 |
| Trimerization Catalyst[4] | 1.80 | 1.80 | 3.0 | 3.0 |
| Blowing agent[5] | 90 | 90 | 120 | 120 |
| Isocyanate[6] | 348.8 | 386.1 | 543 | 571.2 |
| **Reaction Profile** | | | | |
| Cream Time (Sec) | 20 | 22 | -- | 23 |
| Gel Time (Sec) | 39 | 42 | -- | 39 |
| Tack Free Time (Sec) | 48 | 56 | -- | 46 |
| Rise Time (Sec) | 75 | 83 | -- | 77 |
| Exotherm (°C) | 163 | 162 | 168 | 166 |
| **Physical Properties** | | | | |
| Density (kg/m$^3$) | 28.8 | 30.88 | 29.92 | 31.84 |
| "K" Factor (watt/m°K) | 0.0213 | 0.0208 | 0.0192 | 0.0200 |
| Compressive Strength (kg/cm$^2$) | 2.37 | 2.57 | 2.73 | 2.68 |
| Compressive Modulus (kg/cm$^2$) | 58.91 | 68.96 | 73.60 | 77.33 |
| Humid Aging (70°C @ 100% R.H.) | | | | |
| % Volume change after | | | | |
| 1 Day | 4.3 | 3.1 | 3.2 | 3.6 |
| 7 Days | 8.9 | 6.6 | 4.9 | 6.8 |
| 13 Days | 9.7 | 7.4 | -- | 8.0 |
| 14 Days | -- | -- | 5.7 | -- |
| Mobil 45° Burn Test | | | | |
| % Wt. loss | 15.4 | 13.3 | -- | 14.4 |

[1] TERATE 203 aromatic polyester polyol (Hercules Incorporated).
[2] DC-193 silicone-polyoxyalkylene copolymer (Dow Corning)
[3] 75% Potassium 2-ethyl hexoate in diethylene glycol
[4] 2,4,6-Tri(dimethylaminomethyl)phenol
[5] Trichlorofluoromethane
[6] PAPI-27 polymethylene polyphenylisocyanate (Dow Chemical Company)

Example 3

The polyol/propylene carbonate blend described below is prepared and used to determine the effect of storage of the blend at elevated temperatures on the physical properties of foams prepared from the stored blend.

| % by wt. | | |
|---|---|---|
| 95 | Polyol | 3,990 g |
| 5 | Propylene Carbonate | 210 g |
| 100 | | 4,200 g |

The following formulations are used to prepare 250 index foams for testing. The components are the same as those described in Example 2. All values are parts by weight.

| | | |
|---|---|---|
| Polyol(1) | 200 | -- |
| Polyol/propylene carbonate 95/5 blend | -- | 200 |
| Surfactant(2) | 5.0 | 5.0 |
| Catalyst(3) | 9.6 | 8.0 |
| Catalyst(4) | 1.6 | 2.0 |
| Blowing Agent(5) | 96 | 92 |
| Isocyanate(6) | 387.1 | 368 |

A 0.0283 cubic meter foam is prepared using the formulation containing the polyol/propylene carbonate blend and another one cubic foot foam is prepared using the formulations containing the polyol without any propylene carbonate. The physical properties of these foams are tested (designated as "Original" in Tables 1 and 2). Samples of the polyol/propylene carbonate blend are then stored at room temperature (R.T.), 49°C and 70°C respectively. Samples of the 100% polyol (no propylene carbonate added) are also stored at room temperature, 49°C and 70°C. 0.0283 cubic meter foams are prepared from each of the stored samples after 2,4 and 8 weeks. The reaction profiles and physical properties of the foams prepared using 100% polyol are given in Table 1. The reaction profiles and physical properties of the foams prepared using the polyol/propylene carbonate blend are given in Table 2.

It should be noted that the original reaction times in Tables 1 and 2 are slower than the remainder of the tests because of a change in the mixing vessel used to prepare the foams. Much better mixing is obtained for the samples tested at 2, 4, and 8 weeks.

Example 4

The effect of propylene carbonate, ethylene carbonate and a 1:1 blend of propylene carbonate and ethylene carbonate on the viscosity of various polyols is shown in Table 3. All percentages are by weight, based on the weight of the polyol.

The polyols tested are:
   A. VORANOL 360 sucrose polyether polyol (Dow Chemical Company)
   B. ATPOL G-2410 sorbitol polyether polyol (ICI Americas)
   C. CHARDOL 570 aromatic polyester polyol (Freeman Chemical Corporation)
   D. STEPANPOL PS-3152 aromatic polyester polyol (Stepan Chemical Company)
   E. TERATE 203 aromatic polyester polyol (Hercules Incorporated)

Example 5

The polyol used in this example is TERATE 203 aromatic polyester polyol manufactured by Hercules Incorporated.

The following blends of polyol and caprolactone are prepared and tested to determine the effect of caprolactone on the viscosity of the polyol. The viscosities are measured as described in Example 1.

| Wt. % Polyol | Wt. %<br>Caprolactone | Viscosity<br>(cps @ 25°C) | % Viscosity<br>Reduction |
|---|---|---|---|
| 100 | -- | 13,093 | -- |
| 95 | 5 | 6,635 | 49.2 |
| 90 | 10 | 3,598 | 72.5 |
| 85 | 15 | 2,035 | 84.5 |

## Table 1
### REACTION PROFILES AND PHYSICAL PROPERTIES
### OF FOAMS PREPARED WITH 100% POLYOL (NCO/OH INDEX 250)

| Weeks Storage | Original | | | 2 | | | 4 | | | 8 | | |
|---|---|---|---|---|---|---|---|---|---|---|---|---|
| Storage Temperature | R.T. | 49°C | 70°C | R.T. | 49°C | 70°C | R.T. | 49°C | 70°C | R.T. | 49°C | 70°C |
| **Polyol Viscosity @ 25°C (cps)** | 15,000 | -- | -- | 15,000 | 15,500 | 16,000 | 17,400 | 17,400 | 17,600 | 15,500 | 15,300 | 15,700 |
| **Reaction Profile** | | | | | | | | | | | | |
| Cream Time (sec) | 22 | | | 18 | 15 | 16 | 18 | 17 | 18 | 18 | 19 | 18 |
| Gel Time (sec) | 41 | | | 31 | 29 | 29 | 33 | 32 | 35 | 32 | 33 | 32 |
| Tack Free Time (sec) | 49 | | | 38 | 34 | 35 | 39 | 38 | 39 | 39 | 37 | 38 |
| Rise Time (sec) | 82 | | | 56 | 52 | 55 | 63 | 63 | 65 | 68 | 68 | 68 |
| Exotherm (°C) | 165 | | | 168 | 170 | 168 | 165 | 165 | 165 | 165 | 168 | 168 |
| **Physical Properties** | | | | | | | | | | | | |
| Density (kg/cm$^3$) | 28.48 | | | 28.48 | 24.64 | 28.64 | 28.64 | 28.64 | 28.80 | 28.80 | 28.48 | 28.00 |
| "K" Factor (watts/m°K) | 0.0203 | | | 0.0221 | 0.0221 | 0.0219 | 0.0216 | 0.0218 | 0.0222 | 0.0202 | 0.0219 | 0.0219 |
| Compressive Strength (kg/cm$^2$) | 1.97 | | | 2.40 | 1.48 | 2.36 | 2.26 | 2.21 | 2.25 | 2.59 | 2.48 | 2.54 |
| Compressive Modulus (kg/cm$^2$) | 53.43 | | | 62.85 | 39.79 | 60.46 | 63.69 | 68.33 | 63.83 | 56.80 | 57.99 | 56.24 |
| **Humid Aging (70°C, 100% R.H.)** | | | | | | | | | | | | |
| **% Volume Change After** | | | | | | | | | | | | |
| 1 Day | 4.9 | | | 4.4 | 9.4 | 5.2 | 5.7 | 5.7 | 6.6 | 5.6 | 6.4 | 5.7 |
| 7 Days | 8.2 | | | 8.4 | 18.6 | 8.8 | 10.2 | 9.0 | 11.0 | 9.1 | 8.9 | 8.5 |
| 14 Days | 9.7 | | | 9.8 | 23.7 | 10.5 | 10.5 | 9.9 | 11.5 | 9.3 | 9.1 | 8.8 |
| 28 Days | 12.3 | | | 10.2 | 25.1 | 10.8 | 11.5 | 10.9 | 12.9 | 10.2 | 10.3 | 9.6 |

0 276 452

Table 2
REACTION PROFILES AND PHYSICAL PROPERTIES OF FOAMS PREPARED
WITH 95/5 POLYOL/PROPYLENE CARBONATE BLEND (NCO/OH INDEX 250)

| Weeks Storage | Original | | | 2 | | | 4 | | | 8 | | |
|---|---|---|---|---|---|---|---|---|---|---|---|---|
| Storage Temperature | R.T. | 49°C | 70°C | R.T. | 49°C | 70°C | R.T. | 49°C | 70°C | R.T. | 49°C | 70°C |
| Polyol Viscosity @ 25°C (cps) | 7,000 | -- | -- | 7,000 | 7,000 | 7,000 | 7,400 | 7,600 | 7,900 | 7,300 | 7,350 | 7,500 |
| Reaction Profile | | | | | | | | | | | | |
| Cream Time (sec) | 22 | | | 16 | 16 | 15 | 17 | 18 | 17 | 17 | 18 | 17 |
| Gel Time (sec) | 42 | | | 30 | 31 | 28 | 33 | 33 | 33 | 33 | 33 | 32 |
| Tack Free Time (sec) | 49 | | | 36 | 35 | 35 | 39 | 42 | 49 | 38 | 37 | 39 |
| Rise Time (sec) | 80 | | | 58 | 56 | 59 | 66 | 66 | 68 | 68 | 73 | 68 |
| Exotherm (°C) | 163 | | | 168 | 169 | 164 | 168 | 167 | 168 | 167 | 168 | 168 |
| Physical Properties | | | | | | | | | | | | |
| Density (kg/cm³) | 27.36 | | | 27.52 | 27.52 | 27.52 | 27.68 | 27.68 | 27.84 | 27.36 | 27.52 | 27.52 |
| "K" Factor (watts/m°K) | 0.0203 | | | 0.0219 | 0.0219 | 0.0219 | 0.0218 | 0.0222 | 0.0224 | 0.0208 | 0.0216 | 0.0226 |
| Compressive Strength (kg/cm²) | 2.04 | | | 2.38 | 2.51 | 2.53 | 2.26 | 2.26 | 2.41 | 2.38 | 2.45 | 2.61 |
| Compressive Modulus (kg/cm²) | 51.25 | | | 59.54 | 59.61 | 61.72 | 61.65 | 61.72 | 64.11 | 59.33 | 57.22 | 59.33 |
| Humid Aging (70°C, 100% R.H.) % Volume Change After | | | | | | | | | | | | |
| 1 Day | 4.7 | | | 3.9 | 4.2 | 4.0 | 5.2 | 5.3 | 5.1 | 5.1 | 4.9 | 4.8 |
| 7 Days | 9.0 | | | 7.8 | 8.1 | 7.7 | 8.5 | 8.5 | 8.9 | 6.9 | 7.6 | 7.3 |
| 14 Days | 9.9 | | | 9.2 | 9.4 | 8.8 | 9.4 | 9.3 | 9.6 | 6.9 | 7.7 | 7.3 |
| 28 Days | 11.2 | | | 9.6 | 9.0 | 8.8 | 9.9 | 10.2 | 10.1 | 7.1 | 8.0 | 7.4 |

TABLE 3

| Polyol | % | % Propylene Carbonate | % Ethylene Carbonate | % 50/50 Blend* | Viscosity (cps @ 25°C) | % Viscosity Reduction |
|---|---|---|---|---|---|---|
| A | 100 | - | - | - | 3,558 | - |
|   | 95 | 5 | - | - | 1,996 | 43.9 |
|   | 95 | - | 5 | - | 2,040 | 42.7 |
|   | 95 | - | - | 5 | 2,064 | 42.0 |
| B | 100 | - | - | - | 8,749 | - |
|   | 95 | 5 | - | - | 4,394 | 49.8 |
|   | 95 | - | 5 | - | 4,728 | 46.0 |
|   | 95 | - | - | 5 | 4,561 | 47.9 |
| C | 100 | - | - | - | 7,176 | - |
|   | 95 | 5 | - | - | 3,647 | 49.2 |
|   | 95 | - | 5 | - | 4,079 | 43.2 |
|   | 95 | - | - | 5 | 3,745 | 47.8 |
| D | 100 | - | - | - | 2,394 | - |
|   | 95 | 5 | - | - | 1,243 | 48.1 |
|   | 95 | - | 5 | - | 1,288 | 46.2 |
|   | 95 | - | - | 5 | 1,254 | 47.6 |
| E | 100 | - | - | - | 17,497 | - |
|   | 95 | - | 5 | - | 7,923 | 54.7 |
|   | 95 | - | - | 5 | 7,490 | 57.2 |

*50 parts propylene carbonate and 50 parts ethylene carbonate.

0 276 452

## Claims

1. An aromatic polyester polyol composition characterized in that it consists essentially of (1) aromatic polyester polyols derived from dimethyl terephthalate process residue and (2) from about 5% to about 15%, based on the weight of the polyols, of a cyclic organic viscosity reducing agent selected from the group consisting of propylene carbonate, ethylene carbonate, mixtures of ethylene carbonate and propylene carbonate, and caprolactone.

2. The composition of claim 1 further characterized in that the aromatic polyester polyols are the reaction product of dimethyl terephthalate process residue and diethylene glycol.

3. The composition as claimed in claim 1 or 2, further characterized in that the viscosity reducing agent is propylene carbonate.

4. A process for reducing the viscosity of aromatic polyester polyols derived from dimethyl terephthalate process residue, characterized by mixing said polyols with from about 5% to about 15%, based on the weight of the polyols, of a cyclic organic viscosity reducing agent selected from the group consisting of propylene carbonate, ethylene carbonate, mixtures of ethylene carbonate and propylene carbonate, and caprolactone.

5. The process of claim 4 further characterized in that the aromatic polyester polyols are the reaction product of dimethyl terephthalate process residue and diethylene glycol.

The process as claimed in claim 4 and 5, further characterized in that the viscosity reducing agent is propylene carbonate.

## DOCUMENTS CONSIDERED TO BE RELEVANT.

| Category | Citation of document with indication, where appropriate, of relevant passages | Relevant to claim | CLASSIFICATION OF THE APPLICATION (Int. Cl.4) |
|---|---|---|---|
| A | US-A-3 401 144 (J.W. BRITAIN)<br>* Claims 1-6; column 3, lines 18-44 *<br>--- | 1,3 | C 08 G 18/42<br>C 08 K 5/15<br>C 08 K 5/10<br>C 08 J 9/00 |
| A | US-A-4 237 238 (D.T. DEGUISEPPI et al.)<br>* Claims 1,3 *<br>--- | 1,2 | C 08 G 18/14<br>C 08 L 67/02<br>C 08 L 71/00 |
| A | US-A-4 621 105 (G.L. STATTON et al.)<br>* Claim 1; column 2, lines 15-43 *<br>----- | 1 | |

**TECHNICAL FIELDS SEARCHED (Int. Cl.4)**

C 08 G
C 08 K
C 08 J

The present search report has been drawn up for all claims

| Place of search | Date of completion of the search | Examiner |
|---|---|---|
| THE HAGUE | 15-04-1988 | VAN PUYMBROECK M.A. |

EPO FORM 1503 03.82 (P0401)